# EUROPEAN PATENT APPLICATION

(11) **EP 4 834 685 A1**
(43) Date of publication of application: **04.11.2026**
(21) Application number: 24912213.6
(22) Date of filing: 02.12.2024
(51) Int. Cl.: B60W 30/045, A01B 69/00, B60W 30/18, G05D 1/221

(54) **REMOTE OPERATION SYSTEM**

(30) Priority: 27.12.2023 JP 2023221133
(71) Applicant: KUBOTA CORPORATION, Osaka-shi, Osaka 530-0011 (JP)
(72) Inventor: TOKIEDA Yoshiki, Sakai-shi, Osaka 590-0908 (JP)
(74) Representative: Cabinet Beau de Loménie
(86) International application number: PCT/JP2024/042559
(87) International publication number: WO 2025/142323

(57) **Abstract**

It is possible for a remote user to cause a remote working machine (1) to travel in a stable manner.

A remote manipulation system (100) includes a machine body (3), a working device (2) supported by the machine body (3), a remote working machine (1) including a traveling device (7) to support the machine body (3) such that the machine body (3) is allowed to travel, and a remote manipulator (35) to receive an operation and perform a remote manipulation in which the remote manipulator (35) remotely manipulates the remote working machine (1). The traveling device (7) is configured to, in the remote manipulation, cause the machine body (3) to travel at or below a vehicle speed limit corresponding to a steering angle of the remote working machine (1). The traveling device (7) is configured to, in the remote manipulation, cause the machine body (3) to travel at or below the vehicle speed limit that decreases as the steering angle increases.

## Description

### Technical Field

The present invention relates to remote manipulation systems to remotely manipulate remote working machines.

### Background Art

A remote control system to remotely manipulate a working vehicle is known (for example, Patent Literature 1).

### Citation List

### Patent Literature

PTL 1: Japanese Unexamined Patent Application Publication No. 2021-36796

### Summary of Invention

### Technical Problem

However, travel speed a human remote manipulator (remote user) feels when performing remote manipulation at a location away from a working machine (working vehicle) and travel speed the driver actually in the working machine feels when manually operating the working machine are different, and therefore the remote manipulation needs be performed in a manner different from the manual operation.

The present invention was made in view of such an issue of the related art, and an object thereof is to provide a remote manipulation system to allow a remote user to cause a remote working machine to travel in a stable manner.

### Solution to Problem

A remote manipulation system according to an example embodiment of the present invention includes a remote working machine including a machine body, a working device to be supported by the machine body, and a traveling device to support the machine body such that the machine body is allowed to travel, and a remote manipulator to receive an operation and perform a remote manipulation in which the remote manipulator remotely manipulates the remote working machine, wherein the traveling device is configured to, in the remote manipulation, cause the machine body to travel at or below a vehicle speed limit corresponding to a steering angle of the remote working machine.

The traveling device may be configured to, in the remote manipulation, cause the machine body to travel at or below the vehicle speed limit that decreases as the steering angle of the remote working machine increases.

The remote working machine may include a linkage to detachably connect the working device to the machine body. The traveling device may be configured to cause the machine body to travel at or below the vehicle speed limit that corresponds to the working device connected to the linkage.

The traveling device may be configured to cause the machine body to travel at or below the vehicle speed limit that is lower in a case where the working device is connected to the linkage than in a case where no working device is connected to the linkage.

The remote manipulation system may further include a first detector to detect an attitude of the remote working machine. The traveling device may be configured to cause the machine body to travel at or below the vehicle speed limit that decreases as the attitude of the remote working machine detected by the first detector is inclined more with respect to a horizontal state.

The remote manipulation system may further include a second detector to detect a slope of a surrounding area of the remote working machine. The traveling device may be configured to cause the machine body to travel at or below the vehicle speed limit that decreases as the slope of the surrounding area detected by the second detector increases.

The second detector may include a sensor to sense the surrounding area of the remote working machine to detect the slope of the surrounding area of the remote working machine.

The second detector may be configured to detect the slope of the surrounding area of the remote working machine based on a position detector to detect a position of the remote working machine, the position of the remote working machine detected by the position detector, and map information indicating one or more slopes stored in a memory and/or a storage.

The remote working machine may be configured to, in addition to be remotely manipulated by the remote manipulator, perform automatic travel in which the remote working machine autonomously travels and/or perform manual travel in which the remote working machine is manually operated by a driver in the remote working machine. The traveling device may be configured to cause the machine body to travel at or below the vehicle speed limit that is lower in a case of the remote manipulation than in a case where the remote working machine performs the automatic travel or the manual travel.

### Advantageous Effects of Invention

With the present invention, it is possible to allow a remote user to cause a remote working machine to travel in a stable manner.

### Brief Description of Drawings

[FIG. 1] FIG. 1 is a block diagram of a remote manipulation system according to an example embodiment of the present invention.
[FIG. 2] FIG. 2 is a side view of a tractor, which is an example of a remote working machine.
[FIG. 3A] FIG. 3A illustrates an example of a forward or rearward inclined state of a remote working machine.
[FIG. 3B] FIG. 3B illustrates an example of a leftward or rightward inclined state of a remote working machine.
[FIG. 3C] FIG. 3C illustrates examples of a slope state of a surrounding area of a remote working machine.
[FIG. 4] FIG. 4 illustrates an example of correspondence data.
[FIG. 5] FIG. 5 illustrates an example of a display screen of a display.
[FIG. 6] FIG. 6 illustrates an example of a vehicle speed limit map.
[FIG. 7A] FIG. 7A illustrates examples of vehicle speed limit maps based on attachment of a working device.
[FIG. 7B] FIG. 7B illustrates examples of vehicle speed limit maps based on the attitude of a remote working machine.
[FIG. 7C] FIG. 7C illustrates examples of vehicle speed limit maps based on a slope of a surrounding area of a remote working machine.
[FIG. 7D] FIG. 7D illustrates examples of vehicle speed limit maps for a remote working machine for automatic travel or manual travel.
[FIG. 8] FIG. 8 is a flowchart showing operations of a remote working machine and a remote device.
[FIG. 9] FIG. 9 is a flowchart showing operations of a remote working machine and a remote device according to a variation.

### Description of Embodiments

The following description discusses example embodiments of the present invention with reference to drawings.

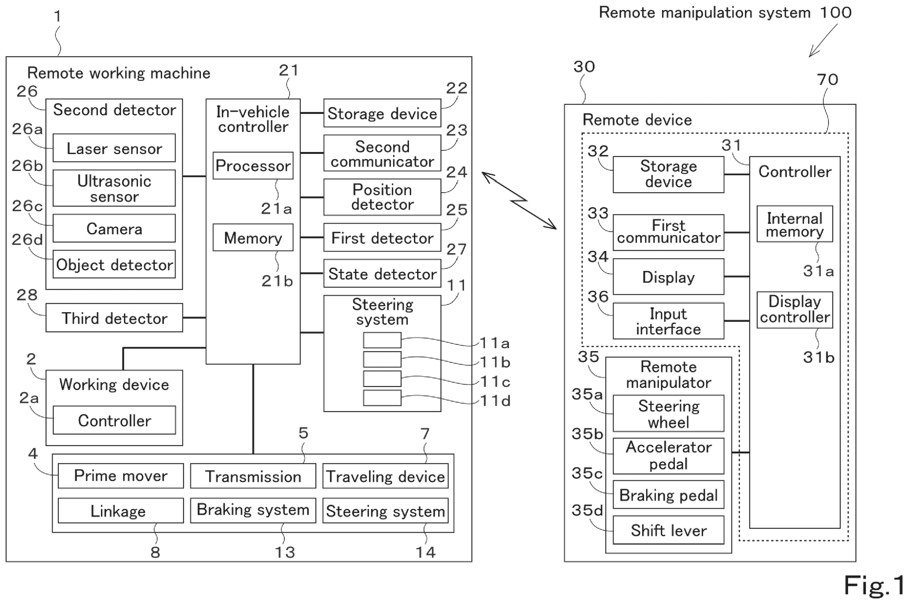

FIG. 1 is a block diagram of a remote manipulation system 100 according to an example embodiment of the present invention. The remote manipulation system 100 includes a remote working machine 1 and a remote device 30. With the remote manipulation system 100 and the remote device 30, it is possible to perform remote manipulation (or remote operation) of the remote working machine 1 and remote monitoring of the remote working machine 1. The remote working machine 1 is an agricultural machine (also referred to as "remotely manipulated agricultural machine") to be remotely operated (for example, remotely caused to travel, remotely caused to perform work, and/or the like) by the remote device 30. Examples of the remote working machine 1 include agricultural machines such as a tractor with a working device 2 such as an implement attached (supported) thereto, a rice transplanter, a combine and the like. In the present example embodiment, the remote working machine 1 is configured to, in addition to be remotely manipulated (operated, controlled) by the remote device 30, be manually operated (manual manipulation, manual operation, manual travel) by a driver (worker, operator) in the remote working machine 1.

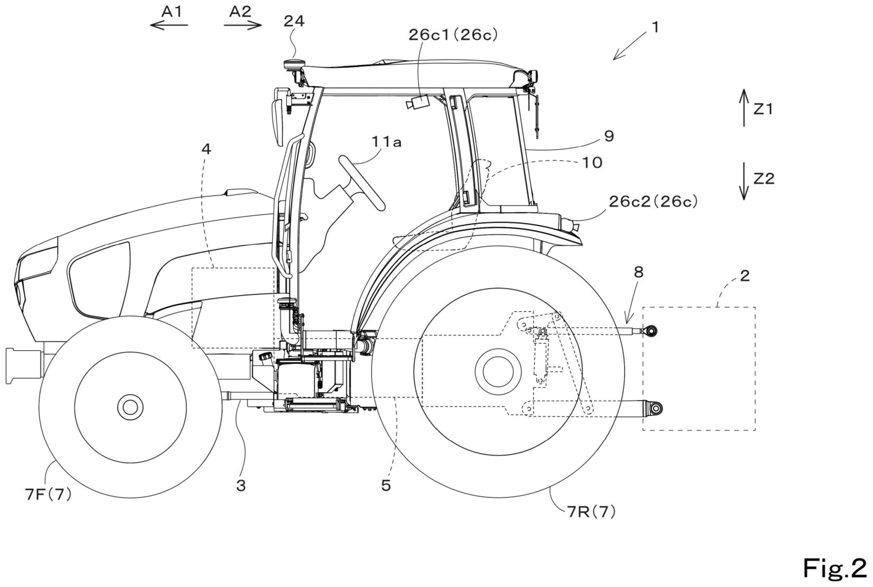

FIG. 2 is a side view of a tractor, which is an example of the remote working machine 1. In the following description, a forward direction with respect to a human driver (operator) sitting on an operator's seat 10 of the remote working machine 1 (direction of arrow A1 in FIG. 2) is referred to as "forward", a rearward direction with respect to the driver (direction of arrow A2 in FIG. 2) is referred to as "rearward", a leftward direction with respect to the driver (direction toward the viewer of FIG. 2) is referred to as "leftward", and a rightward direction with respect to the driver (direction away from the viewer of FIG. 2) is referred to as "rightward". An upward direction with respect to the driver (direction of arrow Z1 in FIG. 2) is referred to as "upward" , and a downward direction with respect to the driver (direction of arrow Z2 in FIG. 2) is referred to as "downward". A horizontal direction perpendicular to a front-rear direction of the remote working machine 1 is referred to as "width direction". The remote working machine 1 includes a machine body 3. The machine body 3 is provided with a traveling device 7. The traveling device 7 includes front wheels 7F and rear wheels 7R provided on the left and right sides of the machine body 3, and supports the machine body 3 such that the machine body 3 is allowed to travel. The traveling device 7 may be a crawler traveling device.

As shown in FIGS. 1 and 2, the machine body 3 is provided with a prime mover 4, a transmission 5, a braking system 13 and a steering system 14. The prime mover 4 includes an engine (diesel engine, gasoline engine), an electrical motor, and/or the like.

The transmission 5, for example, performs the operation to change speed stages to change the propulsive force of the traveling device 7 and switch the direction of travel of the traveling device 7 between forward and rearward, etc.

A manipulator 11 to manually operate the remote working machine 1 is provided in the vicinity of the operator's seat 10. The remote working machine 1 is a tractor configured to travel and perform work unattended, but can also be caused to travel and perform work using the working device 2 by a human driver (operator) sitting in the operator's seat 10 operating the manipulator 11. The manipulator 11 includes a steering wheel 11a, an accelerator pedal 11b, a brake pedal, a shift lever, and/or the like.

A linkage 8 is provided at a rear portion of the machine body 3. The linkage 8 is configured to detachably connect the working device 2 to the machine body 3. The linkage 8 includes a three-point link and/or the like. The remote working machine 1 (machine body 3) is configured to, when the working device 2 is connected to the linkage 8 and the remote working machine 1 is caused to travel by the traveling device 7, raise and lower the working device 2 and change the attitude of the working device 2.

Examples of the working device 2 include a tiller to perform tillage, a fertilizer spreader to spread fertilizer, an agricultural chemical spreader to spread agricultural chemicals, a harvester for harvesting, a mower to mow grass or the like, a tedder to ted grass or the like, a rake to rake grass or the like, and a baler to bale grass or the like. The remote working machine 1 performs agricultural work on an agricultural field using such a working device 2.

As shown in FIG. 1, the remote working machine 1 includes an in-vehicle controller 21, a storage device (memory and/or storage) 22, a second communicator (in-vehicle communicator) 23, a position detector 24, a first detector (inertial measurement unit) 25, a second detector (sensor) 26, a state detector 27, and a third detector 28. An in-vehicle network such as CAN, LIN, and/or FlexRay is provided in the remote working machine 1, and the in-vehicle controller 21 is electrically connected to the storage device 22, the second communicator 23, the position detector 24 and the like.

The in-vehicle controller 21 includes an electronic control unit (ECU) that includes a processor 21a and a memory 21b. The in-vehicle controller 21 is configured or programmed to control the operation of elements of the remote working machine 1. The in-vehicle controller 21 controls a group of actuators that include electrical and/or hydraulic motor(s), cylinder(s), control valve(s) to actuate elements such as the prime mover 4, the transmission 5, the traveling device 7, the braking system 13, and/or the linkage 8 of the remote working machine 1, for example. The in-vehicle controller 21 is configured or programmed to control the group of actuators according to a manual mode in which the driver performs manual operation and a remote mode in which the human remote manipulator (human operator, user) performs remote manipulation. The modes are switched by the manipulator 11, a mode change switch included in a remote manipulator 35 described later, and/or the like. The memory 21b includes a volatile memory, a non-volatile memory, and/or the like. The memory 21b of the in-vehicle controller 21 stores information and data for the in-vehicle controller 21 to control the operation of elements of the remote working machine 1 in a read-write manner.

The storage device 22 is, for example, a solid state drive (SSD), a hard disk drive (HDD), or the like. The storage device 22 stores various information and data for the in-vehicle controller 21 to control elements of the remote working machine 1 in a read-write manners.

The second communicator 23 includes antenna(s), integrated circuit(s) (IC), electrical circuit(s) and/or the like for wireless communication via a mobile phone communication network, the Internet or a wireless LAN. The in-vehicle controller 21 wirelessly communicates with the remote device 30 via the second communicator 23. The in-vehicle controller 21 includes a real time clock (RTC) and is configured or programmed to measure date and time.

Note that the description of the present example embodiment discusses an example in which the remote working machine 1 and the remote device 30 communicate with each other via a mobile phone communication network or the like. Alternatively, the remote working machine 1 and the remote device 30 may be configured to communicate via a mobile phone communication network or the like and an external device such as a server or a relay (repeater). The remote working machine 1 and the remote device 30 may directly communicate with each other via a near field wireless signal such as, for example, a Bluetooth (registered trademark) Low Energy (BLE) signal or a Ultra High Frequency (UHF) signal. In such a case, it is only necessary that interfaces for near field wireless communication be provided in or on the second communicator 23 and the remote device 30, respectively.

The position detector 24 detects the position thereof (positional information including latitude and longitude) using a satellite positioning system. That is, the position detector 24 receives signals (positions of positioning satellites, transmission date and time, correction information, etc.) transmitted from positioning satellites and detects the position thereof based on the received signals. The position detector 24 may be configured to detect, as the position thereof, a position corrected based on a signal of correction etc. from a base station (reference station) which is configured to receive signals from the positioning satellites. The position detector 24 may be configured to calculate the position of the remote working machine 1 based on the detected position thereof and stored outer contour information relating to the remote working machine 1. The position detector 24 may be configured to calculate the position of the working device 2 based on the detected position thereof, stored outer contour information relating to the working device 2, and the position at which the working device 2 is attached to the machine body 3.

The first detector 25 includes a gyroscope sensor, an acceleration sensor and/or the like, and is configured to detect the roll angle, the pitch angle, and the yaw angle, etc. of the remote working machine 1 (machine body 3). That is, the first detector 25 is configured to detect the leftward, rightward, forward, and rearward inclined positions of the remote working machine 1 with respect to a horizontal position (horizontal state) of the remote working machine 1.

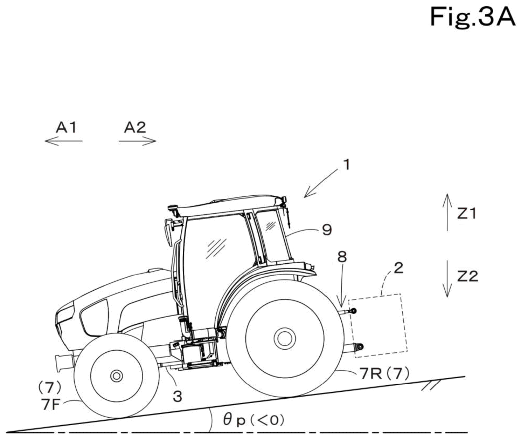

FIG. 3A illustrates an example of the forward or rearward inclined state of the remote working machine 1 as viewed from a side. As shown in FIG. 3A, in the case where the machine body 3 of the remote working machine 1 is inclined forward and downward, the pitch angle θp of the machine body 3 detected by the first detector 25 has a negative value (θp < 0). On the other hand, when the machine body 3 is inclined rearward and downward, the pitch angle θp of the machine body 3 detected by the first detector 25 has a positive value (θp > 0). When the machine body 3 is in the horizontal state (horizontal position), the pitch angle θp of the machine body 3 detected by the first detector 25 is zero (θp = 0).

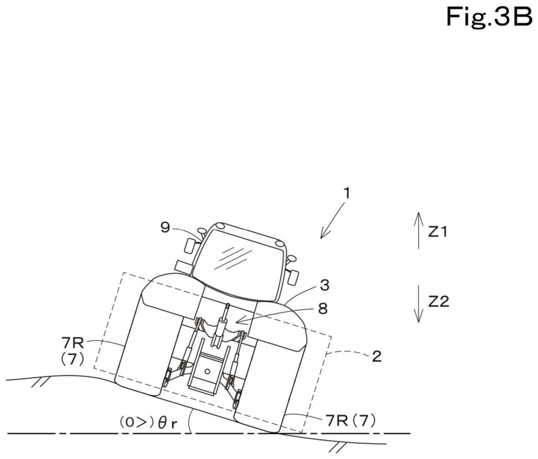

FIG. 3B illustrates an example of the leftward or rightward inclined state of the remote working machine 1 as seen from the rear of the remote working machine 1. As shown in FIG. 3B, when the machine body 3 of the remote working machine 1 is inclined rightward and downward, the roll angle θr of the machine body 3 detected by the first detector 25 has a negative value (θr < 0). On the other hand, when the machine body 3 is inclined leftward and downward, the roll angle θr of the machine body 3 detected by the first detector 25 has a positive value (θr > 0). When the machine body 3 is in the horizontal state (horizontal position), the roll angle θr of the machine body 3 detected by the first detector 25 is zero (θr = 0).

Thus, when the attitude of the remote working machine 1 is horizontal, the absolute value of the pitch angle θp and the absolute value of the roll angle θr detected by the first detector 25 are each equal to or substantially equal to zero. When the attitude of the remote working machine 1 is inclined with respect to the horizontal, the absolute value of the pitch angle θp and the absolute value of the roll angle θr detected by the first detector 25 each increase (FIGS. 3A and 3B).

The second detector 26 includes sensor(s) to sense (monitor) a surrounding area of the remote working machine 1. The second detector 26 includes a laser sensor 26a, an ultrasonic sensor 26b, a camera 26c, and an object detector 26d. In the present example embodiment, the second detector 26 includes a plurality of the laser sensors 26a and a plurality of the ultrasonic sensors 26b. The plurality of laser sensors 26a and the plurality of ultrasonic sensors 26b are located at predetermined areas such as a front portion, a rear portion, right and left side portions of the remote working machine 1 to detect the conditions of the surrounding area including the front, rear, right and left sides of the remote working machine 1 and objects in the surrounding area. For example, the laser sensors 26a and the ultrasonic sensors 26b are provided at predetermined positions on the machine body 3 such that objects located within a predetermined target detection distance from the remote working machine 1 and lower than the machine body 3 are also detectable.

The laser sensors 26a and the ultrasonic sensors 26b are examples of object sensors. A plurality of at least one of the laser sensors 26a and the ultrasonic sensors 26b may be provided in the second detector 26 as object sensors. A plurality of other object sensors may be provided in the second detector 26.

Each laser sensor 26a includes an optical sensor such as a light detection and ranging (LiDAR) sensor. The laser sensor 26a emits millions of pulses of measurement light (laser light) per second from a light source such as a laser diode, and scans the measurement light in a horizontal direction and/or a vertical direction by reflecting it at a rotating mirror to project the light onto a predetermined detection area (sensing area). Then, the laser sensor 26a receives, at a photoreceptor, the measurement light reflected by an object.

The object detector 26d includes electrical circuit(s), IC(s), and/or the like to detect the presence or absence of an object, the position of the object, the type of the object and/or the like based on a light reception signal outputted from the photoreceptor of the laser sensor 26a. The object detector 26d detects the distance to the object based on the period of time between the emission of the measurement light from the laser sensor 26a and the reception of the reflected light by the laser sensor 26a (using time of flight (ToF) method). Examples of the object to be detected by the object detector 26d include an agricultural field for the remote working machine 1 to travel and work, crops in the agricultural field, ground, slope of the ground, other objects and people.

Each ultrasonic sensor 26b includes an aerial ultrasonic sensor such as sonar. The ultrasonic sensor 26b transmits measurement waves (ultrasonic waves) from a transmitter to a predetermined detection range, and receives, at a receiver, the reflected measurement waves reflected by an object. The object detector 26d detects, based on a signal outputted from the receiver of the ultrasonic sensor 26b, the presence or absence of an object, the position of the object, the type of the object, and/or the like. The object detector 26d detects the distance to the object based on the period of time between the emission of the measurement waves by the ultrasonic sensor 26b and the reception of the reflected waves by the ultrasonic sensor 26b (using ToF method).

Each camera 26c includes a charge coupled devices (CCD) camera with a CCD image sensor installed therein, a complementary metal oxide semiconductor (CMOS) camera with a CMOS image sensor installed therein, and/or the like. As shown in FIG. 2, the cameras 26c are located at predetermined areas such as a front portion, a rear portion, left and right side portions of the remote working machine 1 and/or the inside of a cabin 9, to capture one or more images of the surrounding area of the remote working machine 1 including the front, the rear and the left and right sides, etc. of the remote working machine 1, and output data of the captured image(s). The camera 26c is an example of an imager.

For example, as shown in FIG. 2, a camera 26c1 located inside the cabin 9 captures an image of an area forward of the remote working machine 1 from the operator's seat 10. More specifically, the camera 26c1 captures an image of an area forward (in the direction of travel, in direction A1) of the remote working machine 1 that has the same or substantially the same field of view as the human driver sitting in the operator's seat 10. That is, with the camera 26c1, it is possible to obtain a captured image of an area in the direction of travel of the remote working machine 1.

As shown in FIG. 2, a camera 26c2 provided at the rear portion of the machine body 3 of the remote working machine 1 captures an image of an area rearward of the remote working machine 1. More specifically, the camera 26c2 captures an image of an aera in the direction opposite to the field of view of the human driver sitting in the operator' s seat 10 (area in direction A2). That is, with the camera 26c2, it is possible to obtain a captured image of an area in the direction opposite to the direction of travel of the remote working machine 1.

The object detector 26d may be configured to detect, based on the data of the captured image(s) outputted from the camera(s) 26c, the presence or absence of an object, the position of the object, the type of the object, and/or the like.

Note that the description of the foregoing examples discusses cases where the first detector 25 of the remote working machine 1 detects the inclined attitude (inclined position) of the remote working machine 1. Alternatively or additionally, the second detector 26 may be configured to calculate the slope of the surrounding area of the remote working machine 1 based on signals outputted from the laser sensor(s) 26a, the ultrasonic sensor(s) 26b and/or the camera(s) 26C, etc. For example, the second detector 26 (object detector 26d) is configured to calculate a slope value N indicating the slope of the surrounding area of the remote working machine 1.

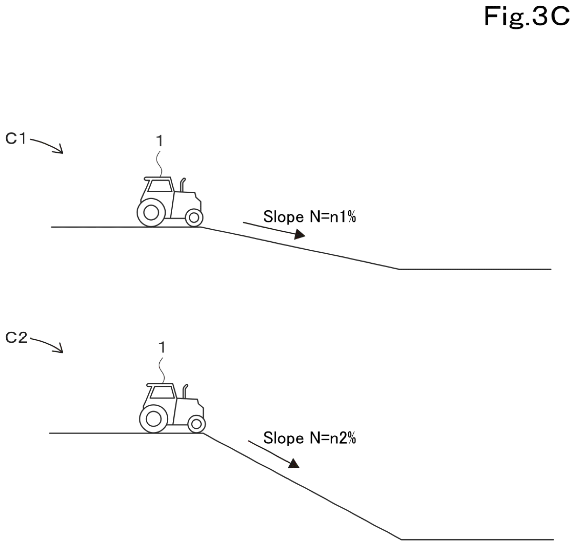

FIG. 3C illustrates examples of the slope state of the surrounding area of the remote working machine 1. As shown in C1 and C2, as the slope of the surrounding area of the remote working machine 1 increases, the slope value N detected by the second detector 26 increases. For example, C1 illustrates a case with a slope value N of n1%, and C2 illustrates a case with a slope value N of n2%. The slope value N with a value of n2 is greater than the slope value N with a value of n1 (n2 > n1), indicating that the slope in C2 is steeper (inclination is greater) than the slope in C1.

The second detector 26 senses the conditions in the surrounding area of the remote working machine 1 and the working device 2 with the laser sensor(s) 26a, the ultrasonic sensor(s) 26b, the camera(s) 26c and the object detector 26d, and outputs sensed information indicating the result of sensing to the in-vehicle controller 21. The sensed information at least includes detection information from the object detector 26d, the data of the image(s) captured by the camera(s) 26c, and the slope of the surrounding area, but may also include other sensed information such as detection information from the laser sensor(s) 26a and detection information from the ultrasonic sensor(s) 26b.

The state detector 27 detects the operating state of the remote working machine 1. Specifically, the state detector 27 includes sensors provided at various positions on the remote working machine 1 (machine body 3) and a computing unit, and the computing unit detects (computes) the operating state of the remote working machine 1 based on output signals from the sensors. The state of the remote working machine 1 to be detected by the state detector 27 includes the driven state and stopped state of elements of the remote working machine 1, and the direction of travel, travel speed, the acceleration, the steering angle of the remote working machine 1, and/or the like. Note that the following description is based on the assumption that the steering angle is zero in the case where the remote working machine 1 travels straight (when traveling straight), and that the steering angle is the absolute value of the deviation from the steering angle during the straight travel, unless otherwise specified.

The state detector 27 generates detection information indicating the detected operating state of the remote working machine 1, and outputs the generated detection information to the in-vehicle controller 21. For example, the detection information from the state detector 27 includes manipulation information for the remote working machine 1 and the working device 2. The manipulation information includes, for example, at least one of the speed (or acceleration) of the remote working machine 1, the gear shift position of the transmission 5, the braking position of the braking system 13, the operation position of the working device 2, or the steering angle of the machine body 3.

The third detector 28 detects the state of the working device 2. The third detector 28 includes sensors provided at various positions on the linkage 8 and the working device 2 and a computing unit, and the computing unit detects (computes) the operating state of the working device 2 based on output signals from the sensors. The state of the working device 2 to be detected by the third detector 28 includes the type of the working device 2, attached or detached state of the working device 2, the driven state and stopped state of elements of the working device 2, the inclination of the working device 2, the height of the working device 2 from the ground, and/or the like.

Note that in the case where the type of the remote working machine 1 is a rice transplanter, the third detector 28 may be configured to detect, based on output signals from the sensors provided in or on a seedling transplanter and/or the like, the driven state and stopped state of mechanisms relating to the seedling transplanter, the remaining amount of material (seedlings, fertilizer), and/or the like. In the case where the type of the remote working machine 1 is a combine, the third detector 28 may be configured to detect, based on output signals from the sensors provided in or on a reaper, a grain tank and/or the like, the driven state and stopped state of mechanisms relating to harvesting, the characteristics of harvested grain, and/or the like.

The position detector 24, the first detector 25, the state detector 27, and the third detector 28 output detection information indicating results detected at predetermined interval(s) or at a predetermined point in time to the in-vehicle controller 21 at appropriate point(s) in time. The second detector 26 also outputs sensed information indicating the result of sensing performed at predetermined interval(s) or at a predetermined point in time to the in-vehicle controller 21 at appropriate point(s) in time. The in-vehicle controller 21 causes the internal memory 21b to store the detection information and sensed information inputted from the position detector 24, the state detector 27, and the second detector 26.

The in-vehicle controller 21 sequentially transmits pieces of the detection information and the sensed information from the second detector 26 stored in the internal memory 21b to the remote device 30 via the second communicator 23 at predetermined interval(s) or a predetermined point in time in the case of the remote operation.

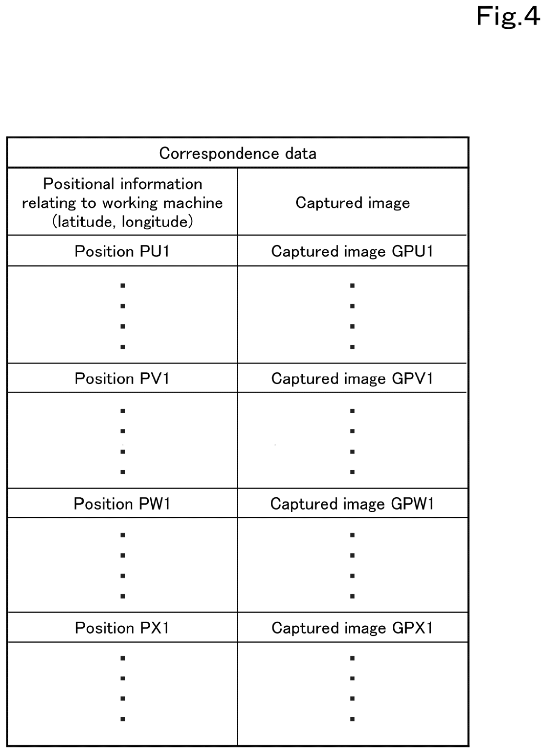

The detection information and sensed information transmitted from the remote working machine 1 in such a manner include correspondence data in which positional information of the remote working machine 1 and the captured image of an area in the direction of travel of the remote working machine 1 are associated with each other (see FIG. 4). FIG. 4 shows an example of correspondence data. That is, pieces of correspondence data in each of which detection information from the position detector 24 (that is, positional information of the remote working machine 1) and sensed information from the second detector 26 (for example, an image captured by the camera 26c1) are associated with each other are sequentially transmitted to the remote device 30. Regarding captured images, as shown in FIG. 3, pieces of correspondence data in which pieces of positional information (for example, positions PU1, PV1, PW1, PX1) of the remote working machine 1 detected by the position detector 24 and captured images (for example, captured images GPU1, GPV1, GPW1, GPX1) captured by the camera 26c1 are associated with each other are sequentially transmitted to the remote device 30.

The in-vehicle controller 21 communicates with a controller 2a included in the working device 2, and causes the controller 2a to control the operation of the working device 2. That is, the in-vehicle controller 21 controls the operation of the working device 2 via the controller 2a to cause the working device 2 to perform work on an agricultural field. For example, the controller 2a includes CPU(s), one or more memories, and the like. Note that some working devices 2 do not include the controller 2a. In such cases, the in-vehicle controller 21 controls the linkage 8 to control the attitude of the working device 2 and cause the working device 2 to perform work on an agricultural field.

The in-vehicle controller 21 controls, based on detection information and the like acquired from the first detector 25, the second detector 26, the state detector 27, the third detector 28 and/or the like, travel of the remote working machine 1, work performed by the working device 2, and other operations of the remote working machine 1. In the case where the in-vehicle controller 21 receives via the second communicator 23 a remote manipulation signal transmitted from the remote device 30, the in-vehicle controller 21 controls the travel of the remote working machine 1, the work performed by the working device 2, and other operations of the remote working machine 1 based on the remote manipulation signal in addition to the above-mentioned information.

When the in-vehicle controller 21 controls the travel of the remote working machine 1 or the work performed by the working device 2, the in-vehicle controller 21 determines, based on the detection information from the object detector 26d, whether or not an object is at a distance less than a predetermined distance from the remote working machine 1 or the working device 2 and the object is likely to contact the remote working machine 1 or the working device 2. Then, in the case where the in-vehicle controller 21 determines that an object is at a distance less than a predetermined distance from the remote working machine 1 or the working device 2 and the object is likely to contact the remote working machine 1 or the working device 2, the in-vehicle controller 21 controls the traveling device 7, the working device 2 and/or the like to automatically stop the travel or work of the remote working machine 1 to avoid contact with the object.

The following describes the remote device 30. As shown in FIG. 1, the remote device 30 is located at a position away from the remote working machine 1. With the remote device 30, it is possible for a remote user (human remote manipulator) to remotely control (operate, manipulate) the remote working machine 1, and to monitor the state of the remote working machine 1 and the surrounding environment of the remote working machine 1. The remote device 30 includes a controller 31, a storage device (memory and/or storage) 32, a first communicator 33, a display 34, a remote manipulator 35, and an input interface 36.

The controller 31 includes a processor configured or programmed to control the operation of each element of the remote device 30. This processor functions as the controller 31 to control the operation of each element of the remote device 30, for example, by performing a remote control program, an application and/or the like stored in the storage device 32. The controller 31 may include hardware including integrated circuit(s) (IC chip(s)) and/or the like, or may be realized by software using a computer. In the later case, the computer includes a recording medium storing program(s) that is/are software to achieve functions of the controller 31 and various data relating to the remote working machine 1 in a computer-readable manner, an arithmetic circuit such as a central processing unit (CPU) to execute instructions of the program(s), a random access memory (RAM) where the programs and data are loaded, and/or the like. The arithmetic circuit reads the program(s) from the recording medium and executes the program(s), thus achieving the functions of the controller 31.

An internal memory 31a included in the controller 31 is a volatile or nonvolatile memory. The internal memory 31a stores information and data for the controller 31 to control the operation of each element of the remote device 30 in a read-write manner.

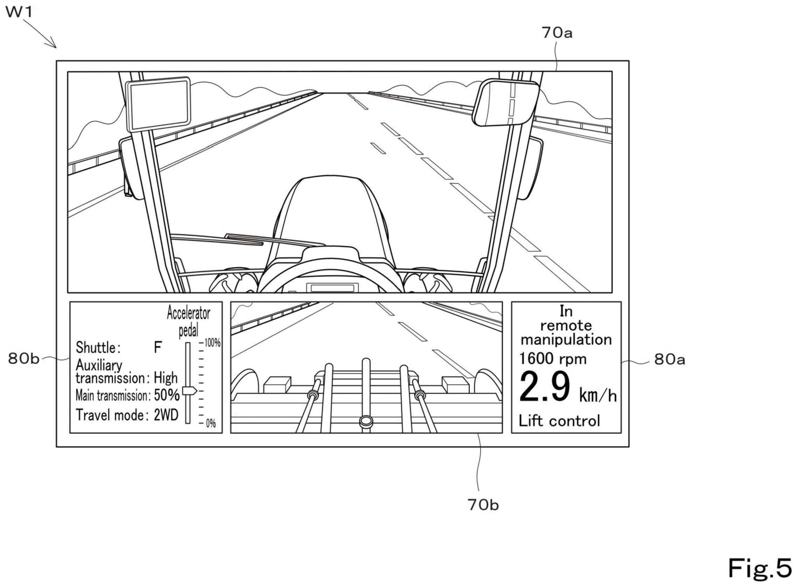

A display controller 31b included in the controller 31 includes the function to control a display screen displayed by the display 34. For example, the display controller 31b causes the display 34 to display a display screen W1 (FIG. 5) to indicate information relating to remote operation.

The storage device 32 prestores applications such as a remote control program to remotely operate the remote working machine 1 and a remote monitoring program to remotely monitor the remote working machine 1, various data, and/or the like. The storage device 32 is, for example, a solid state drive (SSD), hard disk drive (HDD) and/or the like.

The first communicator 33 includes antenna(s), integrated circuit(s) (IC), electrical circuit(s) and/or the like for wireless communication via a mobile phone communication network, the Internet or a wireless LAN. The first communicator 33 is configured to wirelessly communicate with the remote working machine 1 under control of the controller 31. The first communicator 33 receives various data (detection information from the position detector 24, the first detector 25, the state detector 27, and the third detector 28, sensed information from the second detector 26, and/or the like) transmitted from the second communicator 23. For example, the first communicator 33 receives correspondence data in which positional information of the remote working machine 1 and captured image(s) of an area in the direction of travel of the remote working machine 1 are associated with each other.

The display 34 includes, for example, a liquid crystal display (LCD) or an organic light emitting diode (OLED) display. The display 34 displays various information for remote operation of the remote working machine 1. For example, the display 34 displays, based on an instruction signal from the display controller 31b, a display screen W1 indicating information relating to remote operation of the remote working machine 1. FIG. 5 illustrates an example of the display screen W1 of the display 34. As shown in FIG. 5, images captured by a plurality of cameras 26c are displayed on the display screen W1 of the display 34.

The input interface 36 is configured to operate the remote device 30. The remote user (human remote manipulator) can input instructions into the remote device 30 by operating the input interface 36. The input interface 36 includes sensor(s) to detect operation amount, operation speed, operation direction of the user's operation and/or the like, and a driver to calculate (define) an instruction signal for the remote device 30 according to detection result(s) from the sensor(s). The driver includes a program stored in the storage device 32. When the remote user (human remote manipulator) operates the input interface 36, the sensor(s) of the input interface 36 detects the operation amount and/or the like, and inputs the detected operation amount into the driver of the input interface 36. The driver of the input interface 36 defines an instruction signal according to the detection result(s) from the sensor(s). When the input interface 36 defines the instruction signal, the input interface 36 inputs the defined instruction signal into the controller 31. The controller 31 controls the remote device 30 based on the instruction signal inputted from the input interface 36.

Note that the input interface 36 may be a touch panel included in the display 34 to make it possible to detect a touch on the display 34 or may include hardware switch(es) and/or the like.

The remote manipulator 35 is a device to perform a remote manipulation in which the remote manipulator 35 remotely operates (remotely manipulates) the remote working machine 1. The remote manipulator 35 includes a steering wheel 35a, an accelerator pedal 35b, a braking pedal 35c, and a shift lever 35d which are provided in the vicinity of a remote user's seat. The remote manipulator 35 receives the remote user's operation. The remote user remotely manipulates (remotely controls, remotely operates) the travel of the remote working machine 1 or the work performed by the working device 2 by operating the remote manipulator 35 while sitting in the remote user's seat. The remote user monitors the remote working machine 1 and the surrounding environment of the remote working machine 1 via the display 34. The remote user can input predetermined information or instructions into the remote device 30 by operating the remote manipulator 35. Note that the remote manipulator 35 may be a touch pad, hardware switch(es) and/or the like.

Note that, as shown in FIG. 1, the remote device 30 may include a display terminal 70 and the remote manipulator 35. That is, the display terminal 70 may be a terminal device including the controller 31, the storage device 32, the first communicator 33, the display 34, and the input interface 36. Examples of the display terminal 70 include portable terminal devices such as a tablet and a smartphone, and stationary computers provided at a base station.

When the remote user operates the remote manipulator 35 and thus inputs an action instruction for the remote working machine 1, the controller 31 generates a remote manipulation signal corresponding to the inputted action instruction and causes the first communicator 33 to transmit the generated remote manipulation signal to the remote working machine 1. That is, the remote manipulation signal corresponding to the operation of the steering wheel 35a, the accelerator pedal 35b, the braking pedal 35c and/or the shift lever 35d is transmitted to the remote working machine 1. When the in-vehicle controller 21 of the remote working machine 1 receives the remote manipulation signal from the remote device 30 via the second communicator 23, the in-vehicle controller 21 causes element(s) of the remote working machine 1 to operate to control the travel and steering of the remote working machine 1 and/or control working action of the working device 2, based on the remote manipulation signal, the detection information from the position detector 24, the sensed information from the second detector 26, and the detection information from the state detector 27.

The in-vehicle controller 21 periodically transmits the detection information from the position detector 24, the first detector 25, the state detector 27 and the third detector 28 and the sensed information from the second detector 26 to the remote device 30 via the second communicator 23. When the controller 31 of the remote device 30 receives the detection information and sensed information via the first communicator 33, the controller 31 causes the internal memory 31a to store the received information and to cause the display 34 to display the received information, etc.

The speed the user feels when performing the remote manipulation at a location away from the remote working machine 1 and the speed the user feels when actually riding and manually operating (performing manual travel of) the remote working machine 1 are different. Thus, the in-vehicle controller 21 performs a control to adjust the travel speed of the traveling device 7 to cause the remote working machine 1 to travel in a stable manner in the case of remote manipulation.

In remote manipulation, the traveling device 7 causes the machine body 3 to travel at or below a vehicle speed limit corresponding to the steering angle. Specifically, the traveling device 7 causes the machine body 3 (remote working machine 1) to travel at or below the vehicle speed limit that decreases as the steering angle increases. In other words, the traveling device 7 causes the machine body 3 to travel at or below the vehicle speed limit that increases as the steering angle decreases.

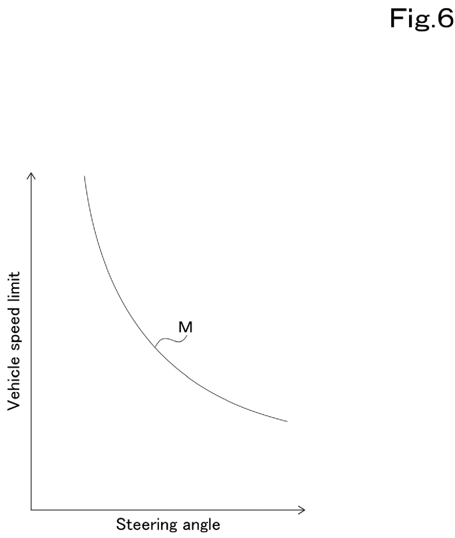

The storage device 22 of the remote working machine 1 prestores a vehicle speed limit map (graph) M (FIG. 6) that defines a relationship between the steering angle and the vehicle speed limit that is an upper limit of the vehicle speed (travel speed) of the traveling device 7. The vehicle speed limit map M may be retained as table data. A software program including a function which takes the steering angle as an input argument may be prestored in the storage device 22, and the in-vehicle controller 21 in the remote mode may acquire the vehicle speed limit by executing the software program.

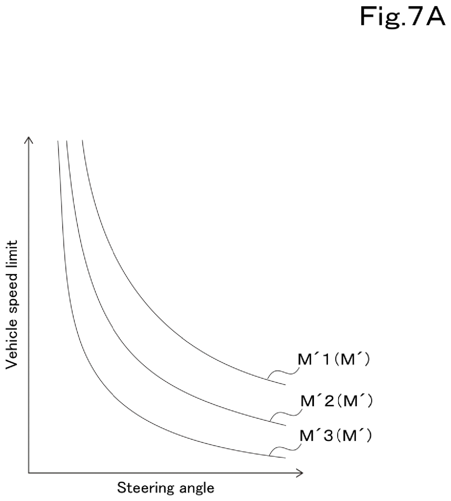

FIG. 6 illustrates an example of the vehicle speed limit map M. In FIG. 6 and in FIGS. 7A to 7D described later, the vertical axis indicates the vehicle speed limit and the horizontal axis indicates the steering angle. As shown in FIG. 6, the vehicle speed limit map M is such that the vehicle speed limit decreases as the steering angle increases. In other words, the vehicle speed limit decreases monotonically with increasing steering angle. Note that the vehicle speed limit map M has a curve and the vehicle speed limit changes to a greater extent when the steering angle is large than when the steering angle is small. However, the vehicle speed limit need only decrease as the steering angle increases. The vehicle speed limit map M may have a straight or substantially straight line such that the vehicle speed limit and the steering angle are proportional to each other.

When the in-vehicle controller 21 in the remote mode receives the remote manipulation signal from the remote device 30, the in-vehicle controller 21 consults (references) the vehicle speed limit map M and acquires a vehicle speed limit that corresponds to the steering angle of the machine body 3 detected by the state detector 27. The in-vehicle controller 21 inputs instruction signals into elements of the remote working machine 1 and perform a control to cause the machine body 3 (remote working machine 1) to travel such that the speed of the machine body 3 does not exceed the vehicle speed limit.

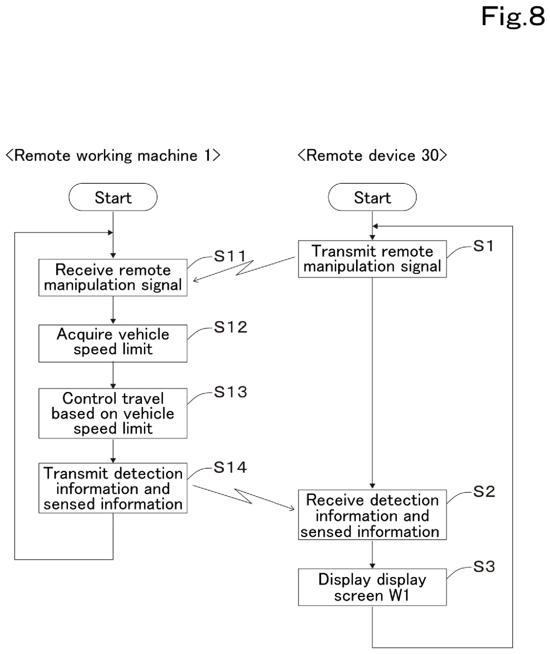

FIG. 8 is a flowchart showing operations of the remote working machine 1 and the remote device 30. Steps of the flowchart shown in the left portion of FIG. 8 are performed by the in-vehicle controller 21 in the remote mode based on software program(s) stored in the storage device 22. Steps of the flowchart shown in the right portion of FIG. 8 are performed by the controller 31 of the remote device 30 based on the software program(s) stored in the storage device 32.

When the remote user inputs an operation (instruction) via the remote manipulator 35, the controller 31 transmits a remote manipulation signal that corresponds to the received operation (instruction) to the remote working machine 1 via the first communicator 33 (S1).

When the in-vehicle controller 21 in the remote mode receives the remote manipulation signal from the remote device 30 via the second communicator 23 (S11), the in-vehicle controller 21 acquires a current vehicle speed limit of the remote working machine 1 (S12). Specifically, the in-vehicle controller 21 consults the vehicle speed limit map M and acquires the vehicle speed limit that corresponds to the current steering angle of the machine body 3 detected by the state detector 27.

When the in-vehicle controller 21 acquires the vehicle speed limit, the in-vehicle controller 21 controls the travel speed and the steering angle of the remote working machine 1 based on the vehicle speed limit (S13). Specifically, the in-vehicle controller 21 performs a control to cause elements of the remote working machine 1 to operate based on the remote manipulation signal, the vehicle speed limit, detection information from the position detector 24, sensed information from the second detector 26, and detection information from the state detector 27. For example, when the travel speed of the remote working machine 1 acquired by the state detector 27 is higher than the vehicle speed limit or when the travel speed is at the vehicle speed limit and shows an increasing trend, the in-vehicle controller 21 inputs instruction signal(s) into element(s of the remote working machine 1 to brake the traveling device 7 or reduce the travel speed of the traveling device 7.

The in-vehicle controller 21 acquires again detection information from the position detector 24, sensed information from the second detector 26, and detection information from the state detector 27, and transmits the acquired information to the remote device 30 via the second communicator 23 (S14).

When the controller 31 of the remote device 30 receives the detection information and sensed information via the first communicator 33 (S2), the controller 31 temporarily stores such information in the internal memory 31a and then reads the information. Then, the controller 31 (display controller 31b) causes the display 34 to display the display screen W1 based on the read detection information and sensed information (S3), and returns to step S1.

With the above process, the in-vehicle controller 21 controls the remote working machine 1 based on the remote manipulation signal received from the remote device 30, the detection information and sensed information acquired from elements of the remote working machine 1, and the vehicle speed limit. With this, it is possible for the traveling device 7 to cause the machine body 3 to travel at or below the vehicle speed limit corresponding to the steering angle.

The traveling device 7 may be configured to cause the machine body 3 to travel at or below the vehicle speed limit corresponding to the working device 2 connected to the linkage 8. For example, the traveling device 7 causes the machine body 3 to travel at or below the vehicle speed limit that is lower in the case where a working device 2 is connected to the linkage 8 than in the case where no working device 2 is connected to the linkage 8.

FIG. 7A illustrates examples of vehicle speed limit maps M' based on attachment of a working device 2. The in-vehicle controller 21 corrects the vehicle speed limit map M in relation to the working device 2 connected to the linkage 8, and acquires the vehicle speed limit from the corrected vehicle speed limit map M'. For example, the in-vehicle controller 21 corrects, using a first correction value that is based on a working device 2 connected to the linkage 8, the vehicle speed limit map M such that the vehicle speed limit is lower in the case where the working device 2 is connected to the linkage 8 than in the case where the working device 2 is not connected to the linkage 8.

The in-vehicle controller 21 may be configured or programmed to correct the vehicle speed limit map M using the first correction value that is based on the connected working device 2 in the case where the working device 2 is connected to the linkage 8, in addition to whether or not the working device 2 is connected.

For example, the in-vehicle controller 21 corrects the vehicle speed limit map M such that the vehicle speed limit is lower when the position of the center of gravity of the working device 2 connected to the linkage 8 is high than when the position of the center of gravity of the working device 2 connected to the linkage 8 is low. The in-vehicle controller 21 corrects the vehicle speed limit map M such that the vehicle speed limit is lower when the weight of the working device 2 connected to the linkage 8 is large than when the weight of the working device 2 connected to the linkage 8 is small. In the present example embodiment, the in-vehicle controller 21 determines the corrected vehicle speed limit map M' by multiplying the vehicle speed limit that corresponds to each steering angle determined based on the vehicle speed limit map M by the first correction value.

One first correction value is defined per working device 2 connected to the linkage 8, and the storage device 22 stores a table in which such first correction values are associated with pieces of identification information of the corresponding working devices 2. Note that, in the present example embodiment, for the in-vehicle controller 21, the first correction value when no working device 2 is connected to the linkage 8 is "1". Specifically, the in-vehicle controller 21 corrects the vehicle speed limit map M according to a change in state of the working device 2, and retains the corrected vehicle speed limit map M' in the memory 21b. For example, when the in-vehicle controller 21 detects via the third detector 28 that a working device 2 is connected or disconnected, the in-vehicle controller 21 corrects the vehicle speed limit map M.

The in-vehicle controller 21 acquires information regarding whether a working device 2 is connected to the linkage 8 and identification information of the connected working device 2. The in-vehicle controller 21 acquires, from the third detector 28, information regarding whether a working device 2 is connected and, in the case where a working device 2 is connected to the linkage 8, acquires, from the third detector 28, identification information of the connected working device 2. The in-vehicle controller 21 acquires a first correction value from the storage device 22 based on the information acquired from the third detector 28, and corrects the vehicle speed limit map M based on the acquired first correction value.

The examples in FIG. 7A show a vehicle speed limit map M'1 of the case where no working device 2 is connected to the linkage 8, and vehicle speed limit maps M'2 and M'3 of the cases where a working device 2 is connected to the linkage 8. In particular, the vehicle speed limit map M'3 is a vehicle speed limit map M of the case where the position of the center of gravity of the working device 2 connected to the linkage 8 is higher than that of the vehicle speed limit map M'2. As shown in FIG. 7A, the vehicle speed limit maps M'1 to M'3 differ from each other in their vehicle speed limits. The vehicle speed limit maps M'1 to M'3 are arranged in the order of M'3, M'2 and M'1 from the zero side. Thus, the vehicle speed limit map M'2 is lower in vehicle speed limit than the vehicle speed limit map M'1. The vehicle speed limit map M'3 is lower in vehicle speed limit than the vehicle speed limit map M'2.

Note that, in the example described above, the in-vehicle controller 21 acquires information relating to the working device 2 connected to the linkage 8 (presence or absence of the working device 2, identification information of the working device 2) based on the detection result from the third detector 28, but the in-vehicle controller 21 may be configured or programmed to determine such information based on a manual input (for example, a manual input into the remote device 30) by the remote user and correct the vehicle speed limit map M.

The description of the above examples discusses cases where the in-vehicle controller 21 corrects the vehicle speed limit map M for each working device 2 connected to the linkage 8. However, it is only necessary that the traveling device 7 at least cause the machine body 3 to travel at or below the vehicle speed limit corresponding to the working device 2, and the following configuration may be used: the storage device 22 prestores the vehicle speed limit map M' of the case where no working device 2 is connected and vehicle speed limit maps M' that correspond to respective working devices 2, and the in-vehicle controller 21 acquires a vehicle speed limit map M' that satisfies condition(s) relating to the linkage 8 (whether or not a working device 2 is connected, and the working device 2 connected to the linkage 8).

The conditions for the working device 2 connected to the linkage 8 are not limited to the above examples. For example, the vehicle speed limit map M may not be set (corrected or defined) per working device 2. The vehicle speed limit map M may be set per type of the working device 2 (tiller, spreader, etc.), operating state of the working device 2 (operating, stopped), height of the working device 2 from the ground, and/or the like.

The traveling device 7 may cause the machine body 3 to travel at or below a vehicle speed limit that differs depending on the attitude of the remote working machine 1, in addition to or instead of the working device 2. Specifically, the traveling device 7 may cause the machine body 3 to travel at or below a vehicle speed limit that decreases as the attitude of the remote working machine 1 detected by the first detector 25 is inclined more with respect to the horizontal state. In other words, the traveling device 7 may cause the machine body 3 to travel at or below a vehicle speed limit that increases as the attitude of the remote working machine 1 detected by the first detector 25 approaches the horizontal state.

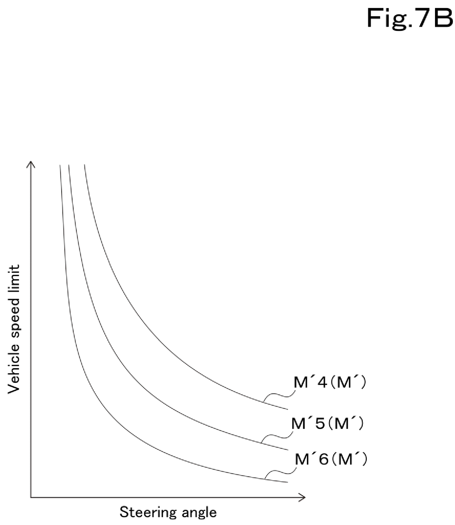

FIG. 7B illustrates examples of vehicle speed limit maps M' based on the attitude of the remote working machine 1. The in-vehicle controller 21 corrects the vehicle speed limit map M according to the attitude of the remote working machine 1 detected by the first detector 25, and acquires the vehicle speed limit from the corrected vehicle speed limit map M'. For example, the in-vehicle controller 21 corrects, using a second correction value that is based on the attitude of the remote working machine 1, the vehicle speed limit map M such that the vehicle speed limit is lower when the attitude of the remote working machine 1 is inclined with respect to the horizontal state than when the attitude of the remote working machine 1 is not inclined with respect to the horizontal state . In the present example embodiment, the in-vehicle controller 21 determines the corrected vehicle speed limit map M' by multiplying the vehicle speed limit that corresponds to each steering angle determined based on the vehicle speed limit map M by the second correction value.

The second correction value is calculated using, for example, a function which takes a pitch angle θp and/or a roll angle θr as input argument(s). Note that the second correction value does not need to be calculated using the function, and may be determined in the following manner: the storage device 22 stores a table in which levels (predetermined angle ranges) of the pitch angle θp and/or the roll angle θr are associated with second correction values, and the in-vehicle controller 21 consults the table to determine a second correction value. In the present example embodiment, for the in-vehicle controller 21, the second correction value when the attitude of the remote working machine 1 is horizontal is "1". Specifically, the in-vehicle controller 21 corrects the vehicle speed limit map M according to a change in attitude of the remote working machine 1, and retains the corrected vehicle speed limit map M' in the memory 21b. For example, when the in-vehicle controller 21 detects via the first detector 25 a change in the attitude of the remote working machine 1, the in-vehicle controller 21 corrects the vehicle speed limit map M.

The examples shown in FIG. 7B show (i) a vehicle speed limit map M'4 of the case where the attitude of the remote working machine 1 is horizontal, i.e., when the pitch angle θp and the roll angle θr are zero, (ii) a vehicle speed limit map M'5 of the case where the absolute value of the pitch angle θp or the roll angle θr has a predetermined value θ1, and (iii) a vehicle speed limit map M'6 of the case where the absolute value of the pitch angle θp or the roll angle θr has a predetermined value θ2 (θ2 > θ1). As shown in FIG. 7B, the vehicle speed limit maps M'4 to M'6 differ from each other in vehicle speed limits. The vehicle speed limit maps M'4 to M'6 are arranged in the order of M'6, M'5, M'4 from the zero side. Thus, the vehicle speed limit map M'5 is defined lower in vehicle speed limit than the vehicle speed limit map M'4. The vehicle speed limit map M'6 is defined lower in vehicle speed limit than the vehicle speed limit map M'5.

Note that the description of the above examples discusses cases where the in-vehicle controller 21 corrects the vehicle speed limit map M according to the attitude of the remote working machine 1. However, it is only necessary that the traveling device 7 at least cause the machine body 3 to travel at or below the vehicle speed limit corresponding to the attitude of the remote working machine 1, and the following configuration may be used: the storage device 22 prestores vehicle speed limit map(s) M, M' corresponding to attitude(s) of the remote working machine 1, and the in-vehicle controller 21 acquires the vehicle speed limit map M or M' that corresponds to the current attitude of the remote working machine 1.

The traveling device 7 may cause the machine body 3 to travel at or below a vehicle speed limit that differs depending on the slope of the surrounding area of the remote working machine 1, additionally to or instead of the attitude of the remote working machine 1. Specifically, the traveling device 7 may cause the machine body 3 to travel at or below a vehicle speed limit that decreases as the slope of the surrounding area detected by the second detector 26 increases. In other words, the traveling device 7 may cause the machine body 3 to travel at or below a vehicle speed limit that increases as the slope of the surrounding area detected by the second detector 26 decreases.

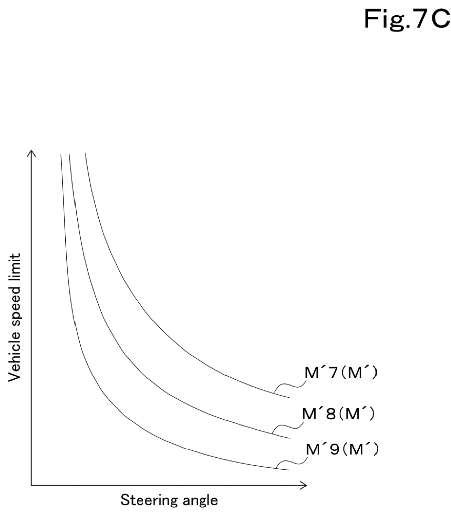

FIG. 7C illustrates examples of vehicle speed limit maps M' based on the slope of the surrounding area of the remote working machine 1. The in-vehicle controller 21 corrects the vehicle speed limit map M according to the slope (slope value N) of the surrounding area of the remote working machine 1 detected via sensing by the second detector 26 (FIG. 3C), and acquires the vehicle speed limit based on the corrected vehicle speed limit map M'. For example, the in-vehicle controller 21 corrects, using a third correction value that is based on the slope value N, the vehicle speed limit map M such that the vehicle speed limit is lower when the slope value N is large than when the slope value N is small. In the present example embodiment, the in-vehicle controller 21 determines the corrected vehicle speed limit map M' by multiplying the vehicle speed limit that corresponds to each steering angle determined based on the vehicle speed limit map M by the third correction value.

The third correction value is calculated using, for example, a function which takes the slope value N as an input argument. The third correction value does not need to be calculated using the function, and may be defined in the following manner: the storage device 22 stores a table in which levels of the slope value N (predetermined ranges of slope values N) are associated with third correction values, and the in-vehicle controller 21 consults the table to determine the corresponding third correction value. In the present example embodiment, for the in-vehicle controller 21, the correction value when the attitude of the remote working machine 1 is horizontal is "1". Specifically, the in-vehicle controller 21 corrects the vehicle speed limit map M according to a change in the slope value N, and retains the corrected vehicle speed limit map M' in the memory 21b. For example, when the in-vehicle controller 21 detects via the first detector 25 a change in the slope value N, the in-vehicle controller 21 corrects the vehicle speed limit map M.

The examples shown in FIG. 7C show (i) a vehicle speed limit map M'7 of the case where the slope of the surrounding area of the remote working machine 1 is relatively small, i.e., the case where the slope value N detected by the second detector 26 is lower than a predetermined value N1, (ii) a vehicle speed limit map M'8 of the case where the slope value N detected by the second detector 26 is the predetermined value N1, and (iii) a vehicle speed limit map M'9 of the case where the slope value N detected by the second detector 26 is a predetermined value N2 (N2 > N1). As shown in FIG. 7C, the vehicle speed limit maps M'7 to M'9 differ from each other in terms of vehicle speed limit. The vehicle speed limit maps M'7 to M'9 are arranged in the order of M'9, M'8, and M'7 from the zero side. Thus, the vehicle speed limit map M'8 is defined lower in vehicle speed limit than the vehicle speed limit map M'7. The vehicle speed limit map M'9 is defined lower in vehicle speed limit than the vehicle speed limit map M'8.

Note that the description of the above examples discusses cases where the in-vehicle controller 21 corrects the vehicle speed limit map M according to the slope (slope value N) of the surrounding area of the remote working machine 1. However, it is only necessary that the traveling device 7 at least cause the machine body 3 to travel at or below the vehicle speed limit corresponding to the slope of the surrounding area, and the following configuration may be used: the storage device 22 prestores vehicle speed limit map(s) M, M' corresponding to slope values N; and the in-vehicle controller 21 acquires the vehicle speed limit map M or M' that corresponds to the current attitude.

In the examples described above, the slope of the surrounding area of the remote working machine 1 is detected by the second detector 26 sensing the surrounding area of the remote working machine 1, but the in-vehicle controller 21 may be configured or programmed to determine the slope of the surrounding area of the remote working machine 1 based on the position of the remote working machine 1 detected by the position detector 24 and map information (slope map) indicating slope(s) prestored in the storage device 22 of the remote working machine 1.

The slope map is travel record data in which pieces of positional information detected by the position detector 24 during past remote-controlled travel of the remote working machine 1 are associated with slope values N detected by the second detector (sensor) 26 during the past remote-controlled travel of the remote working machine 1, for example. The travel record data may be data acquired during manually-controlled travel of the remote working machine 1 performed by the human driver therein or during automatic travel (described later) of the remote working machine 1.

The in-vehicle controller 21 stores (accumulates) pieces of positional information and slope values N that correspond to the pieces of positional information in the storage device 22 of the remote working machine 1, as the travel record data. Note that the travel record data may be data acquired by another working machine other than the remote working machine 1. The travel record data acquired at the other working machine is stored in the storage device 22 via the second communicator 23.

The slope map may be geographical information generated by another system other than the remote working machine 1 and the remote manipulation system 100. The geographical information is stored in the storage device 22 via the second communicator 23. The description of the above examples discusses cases in which the in-vehicle controller 21 determines the slope of the surrounding area of the remote working machine 1 based on the position of the remote working machine 1 remotely controlled to travel and the slope map, and the traveling device 7 causes the machine body 3 to travel at or below the vehicle speed limit that differs depending on the slope. However, based on the position of the remote working machine 1 and the map information indicating information other than the slope, the traveling device 7 may cause the machine body 3 to travel at or below the vehicle speed limit that differs depending on such information.

For example, the map information may include an agricultural field and road(s) (for example, farm road(s)) in the vicinity of the agricultural field, the in-vehicle controller 21 may be configured or programmed to determine, based on the position of the remote working machine 1 remotely controlled to travel and the map information, in which of the agricultural field and the road(s) the remote working machine 1 is located, and the traveling device 7 may be configured to cause the machine body 3 to travel at or below the vehicle speed limit that differs depending on the location of the remote working machine 1. In such a case, the in-vehicle controller 21 corrects the vehicle speed limit map M such that the vehicle speed limits are lower in the case where the remote working machine 1 is located on a road than in the case where the remote working machine 1 is located within the agricultural field.

The description of the above examples discusses individually (i) a case where the traveling device 7 causes the machine body 3 to travel at or below the vehicle speed limit corresponding to the working device 2 connected to the linkage 8, (ii) a case where the traveling device 7 causes the machine body 3 to travel at or below the vehicle speed that differs depending on the attitude of the remote working machine 1, and (iii) a case where the traveling device 7 causes the machine body 3 to travel at or below the vehicle speed limit that differs depending on the slope of the surrounding area of the remote working machine 1. However, such cases may be combined in any manner. For example, the in-vehicle controller 21 may be configured or programmed to determine a corrected vehicle speed limit map M' using at least one of the first to third correction values, and acquire the vehicle speed limit based on the corrected vehicle speed limit map M'.

The description of the above examples discuses cases where the traveling device 7 causes the machine body 3 to travel at or below the vehicle speed limit corresponding to the steering angle in the remote manipulation, but the in-vehicle controller 21 may be configured or programmed to limit the travel speed also during travel other than the travel performed by the remote manipulation. For example, the traveling device 7 may cause the machine body 3 to travel at or below a predetermined vehicle speed limit also during the manual travel. In the present example embodiment, the traveling device 7 causes the machine body 3 to travel at or below the vehicle speed limit corresponding to the steering angle also during the manual operation, similar to the remote manipulation. Specifically, the in-vehicle controller 21 in the manual mode consults a vehicle speed limit map MH prestored in the storage device 22, and acquires the vehicle speed limit corresponding to the current steering angle of the machine body 3 detected by the state detector 27. When the in-vehicle controller 21 acquires the vehicle speed limit, the in-vehicle controller 21 controls the travel and steering of the remote working machine 1 based on the vehicle speed limit.

Also in the case where the remote working machine 1 performs automatic travel (automatic mode) along a predetermined travel route, the traveling device 7 may cause the machine body 3 to travel at or below the predetermined vehicle speed limit in a similar manner. In such a case, similar to the remote manipulation, the traveling device 7 causes the machine body 3 to travel at or below the vehicle speed limit corresponding to the steering angle also during automatic travel. The in-vehicle controller 21 in the automatic mode, based on a predetermined travel route predefined in the storage device 22, the position of the remote working machine 1 detected by the position detector 24, and/or the like, controls a group of actuators to control the operation of elements of the remote working machine 1 such that a positional deviation and/or an orientation deviation of the remote working machine 1 from the travel route approaches zero. In so doing, the in-vehicle controller 21 in the automatic mode consults a vehicle speed limit map MO prestored in the storage device 22, and acquires the vehicle speed limit that corresponds to the current steering angle of the machine body 3 detected by the state detector 27. When the in-vehicle controller 21 acquires the vehicle speed limit, the in-vehicle controller 21 controls the travel and steering of the remote working machine 1 based on the acquired vehicle speed limit.

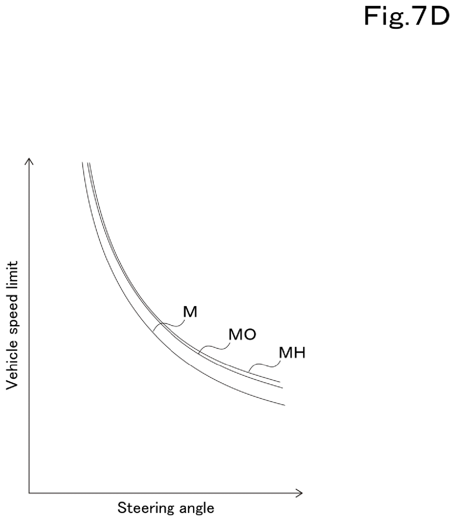

FIG. 7D illustrates examples of the vehicle speed limit map MH for the remote working machine 1 during manual travel and the vehicle speed limit map MO for the remote working machine 1 during automatic travel. The examples in FIG. 7D show the vehicle speed limit map M for the remote-controlled travel, the vehicle speed limit map MH for the manual-controlled travel (manual travel) of the remote working machine 1, and the vehicle speed limit map MH for automatic travel. As shown in FIG. 7D, the vehicle speed limit maps M, MH and MO differ from each other in vehicle speed limit. As is apparent from FIG. 7D, the vehicle speed limit map M is lower in vehicle speed limit than the vehicle speed limit maps MH and MO. In the examples shown in FIG. 7D, the vehicle speed limit map MO is lower in vehicle speed limit than the vehicle speed limit map MH.

Note that, in the examples shown in FIG. 7D, the vehicle speed limit maps MH and MO have a curve in a similar manner to the vehicle speed limit map M, and the vehicle speed limit changes more greatly when the steering angle is large than when the steering angle is small. However, at least the vehicle speed limit maps MH and MO need only have higher vehicle speed limits than the vehicle speed limit map M and the corrected vehicle speed limit map M' at respective corresponding steering angles. The vehicle speed limit maps MH and MO may have a straight or substantially straight line such that the vehicle speed limit and the steering angle are proportional to each other or the vehicle speed limit may be constant regardless of the steering angle.

The description of the examples above discusses case where the storage device 22 stores all the vehicle speed limit maps M, MH and MO, but the storage device 22 may be configured to store one of the vehicle speed limit maps M, MH and MO and the in-vehicle controller 21 may be configured or programmed to determine the other vehicle speed limit maps based on the one vehicle speed limit map and a predetermined arithmetic expression.

### Variation

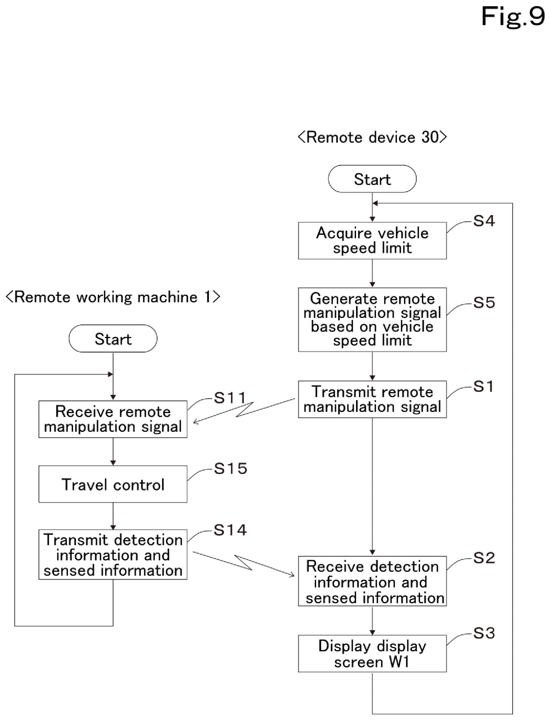

In the remote manipulation system 100 of the above described example embodiments, the in-vehicle controller 21 performs travel control based on the vehicle speed limit. However, the remote manipulation system 100 of a variation differs from the remote manipulation system 100 of the above described example embodiments in that, as shown in FIG. 9, the remote device 30 generates a remote manipulation signal according to the vehicle speed limit and transmits the remote manipulation signal to the remote working machine 1.

In the above described example embodiments, the vehicle speed limit map(s) M is/are stored in the storage device 22 of the remote working machine 1 and the in-vehicle controller 21 acquires the vehicle speed limit based on the vehicle speed limit map M or M'. However, according to the variation, the vehicle speed limit map(s) M is/are stored in the storage device 32 of the remote device 30 and the controller 31 acquires the vehicle speed limit based on the vehicle speed limit map M or M'. The in-vehicle controller 21 periodically transmits, to the remote device 30, current detection information and sensed information relating to the remote working machine 1 via the second communicator 23. When the remote device 30 receives the detection information and the sensed information via the first communicator 33, the remote device 30 temporarily stores the information in the internal memory 31a.

FIG. 9 is a flowchart showing operations of the remote working machine 1 and the remote device 30 according to the variation. When the remote user inputs an action instruction for the remote working machine 1 by operating the remote manipulator 35, the controller 31 consults the vehicle speed limit map M stored in the storage device 32 and acquires the vehicle speed limit that corresponds to the current steering angle of the remote working machine 1 stored in the internal memory 31a (S4). The controller 31 generates a remote manipulation signal based on the action instruction and the vehicle speed limit (S5). For example, in the case where the remote user operates the accelerator pedal 35b, the controller 31 converts the operation into a remote manipulation signal based on which the vehicle speed limit is not exceeded. The remote manipulation signal is transmitted to the remote working machine 1 via the first communicator 33 (S1).

Example embodiments of the present invention provide remote manipulation systems 100 described in the following items.

(Item A1) A remote manipulation system 100 including a remote working machine 1 including a machine body 3, a working device 2 supported by the machine body 3, and a traveling device 7 to support the machine body 3 such that the machine body 3 is allowed to travel, and a remote manipulator 35 to receive an operation and perform a remote manipulation in which the remote manipulator 35 remotely manipulates the remote working machine 1, wherein the traveling device 7 is configured to, in the remote manipulation, cause the machine body 3 to travel at or below a vehicle speed limit corresponding to a steering angle of the remote working machine 1.

With the remote manipulation system 100 according to item A1, it is possible to cause the remote working machine 1 to travel in a stable manner even in a case where the remote user remotely manipulates the remote working machine 1.

(Item A2) The remote manipulation system 100 according to item A1, wherein the traveling device 7 is configured to, in the remote manipulation, cause the machine body 3 to travel at or below the vehicle speed limit that decreases as the steering angle of the remote working machine 1 increases.

With the remote manipulation system 100 according to item A2, it is possible for the remote user to cause the remote working machine 1 to travel in a stable manner even when the steering angle is large.

(Item A3) The remote manipulation system 100 according to item A1, wherein the remote working machine 1 includes a linkage 8 to detachably connect the working device 2 to the machine body 3, and the traveling device 7 is configured to cause the machine body 3 to travel at or below the vehicle speed limit corresponding to the working device 2 connected to the linkage 8.

With the remote manipulation system 100 according to item A3, it is possible for the remote user to cause the remote working machine 1 to travel appropriately according to the working device 2 connected.

(Item A4) The remote manipulation system 100 according to item A3, wherein the traveling device 7 is configured to cause the machine body 3 to travel at or below the vehicle speed limit that is lower in a case where the working device 2 is connected to the linkage 8 than in a case where no working device 2 is connected to the linkage 8.

With the remote manipulation system 100 according to item A4, it is possible for the remote user to cause the remote working machine 1 with the working device 2 connected thereto to travel in a stable manner.

(Item A5) The remote manipulation system 100 according to item A1, further including a first detector 25 to detect an attitude of the remote working machine 1, wherein the traveling device 7 is configured to cause the machine body 3 to travel at or below the vehicle speed limit that decreases as the attitude of the remote working machine 1 detected by the first detector 25 is inclined more with respect to a horizontal state.

With the remote manipulation system 100 according to item A5, it is possible for the remote user to cause the remote working machine 1 to travel in a stable manner according to the attitude of the remote working machine 1 during travel.

(Item A6) The remote manipulation system 100 according to item A1, further including a second detector 26 to detect a slope of a surrounding area of the remote working machine 1, wherein the traveling device 7 is configured to cause the machine body 3 to travel at or below the vehicle speed limit that decreases as the slope of the surrounding area detected by the second detector 26 increases.

With the remote manipulation system 100 according to item A6, it is possible for the remote user to cause the remote working machine 1 to travel in a stable manner according to the slope of the surrounding area of the remote working machine 1.

(Item A7) The remote manipulation system 100 according to item A6, wherein the second detector 26 includes a sensor to sense the surrounding area of the remote working machine 1 to detect the slope of the surrounding area of the remote working machine 1.

With the remote manipulation system 100 according to item A7, it is possible for the second detector 26 to detect the slope of the surrounding area of the remote working machine 1 at an appropriate time and for the remote user to cause the remote working machine 1 to travel in a stable manner according to the current conditions in the surrounding area of the remote working machine 1.

(Item A8) The remote manipulation system 100 according to item A6, wherein the second detector 26 is configured to detect the slope of the surrounding area of the remote working machine 1 based on a position detector 24 to detect a position of the remote working machine 1, the position of the remote working machine 1 detected by the position detector 24, and map information indicating one or more slopes stored in a memory and/or a storage 22.

With the remote manipulation system 100 according to item A8, since the vehicle speed limit is defined according to the slope of the surrounding area of the remote working machine 1 acquired from the map information, it is possible to cause the remote working machine 1 to travel in a stable manner by a relatively simple process.

(Item A9) The remote manipulation system 100 according to item A1, wherein the remote working machine 1 is configured to, in addition to be remotely manipulated by the remote manipulator 35, perform automatic travel in which the remote working machine 1 autonomously travels and/or perform manual travel in which the remote working machine 1 is manually operated by a driver in the remote working machine 1, and the traveling device 7 is configured to cause the machine body 3 to travel at or below the vehicle speed limit that is lower in a case of the remote manipulation than in a case where the remote working machine 1 performs the automatic travel or the manual travel.

With the remote manipulation system 100 according to item A9, it is possible for the remote working machine 1 to travel in a stable manner also in remote manipulation in which the state of the remote working machine 1 cannot be accurately known, similar to other automatic travel and manual travel.

While preferred embodiments of the present invention have been described above, it is to be understood that the embodiments disclosed herein are considered as examples in all aspects and are not considered as limitations. The scope of the present invention is to be determined not by the foregoing description but by the claims, and is intended to include all variations and modifications within the scope of the claims and their equivalents.

### Reference Signs List

- 1: Remote working machine
- 2: Working device
- 3: Machine body
- 7: Traveling device
- 8: Linkage
- 22: Storage device
- 24: Position detector
- 25: First detector
- 26: Second detector
- 35: Remote manipulator
- 100: Remote manipulation system

## Claims

1. A remote manipulation system comprising:
a remote working machine including a machine body, a working device to be supported by the machine body, and a traveling device to support the machine body such that the machine body is allowed to travel; and
a remote manipulator to receive an operation and perform a remote manipulation in which the remote manipulator remotely manipulates the remote working machine; wherein
the traveling device is configured to, in the remote manipulation, cause the machine body to travel at or below a vehicle speed limit corresponding to a steering angle of the remote working machine.

2. The remote manipulation system according to claim 1, wherein
the traveling device is configured to, in the remote manipulation, cause the machine body to travel at or below the vehicle speed limit that decreases as the steering angle of the remote working machine increases.

3. The remote manipulation system according to claim 1, wherein
the remote working machine includes a linkage to detachably connect the working device to the machine body; and
the traveling device is configured to cause the machine body to travel at or below the vehicle speed limit corresponding to the working device connected to the linkage.

4. The remote manipulation system according to claim 3, wherein
the traveling device is configured to cause the machine body to travel at or below the vehicle speed limit that is lower in a case where the working device is connected to the linkage than in a case where no working device is connected to the linkage.

5. The remote manipulation system according to claim 1, further comprising:
a first detector to detect an attitude of the remote working machine; wherein
the traveling device is configured to cause the machine body to travel at or below the vehicle speed limit that decreases as the attitude of the remote working machine detected by the first detector is inclined more with respect to a horizontal state.

6. The remote manipulation system according to claim 1, further comprising:
a second detector to detect a slope of a surrounding area of the remote working machine; wherein
the traveling device is configured to cause the machine body to travel at or below the vehicle speed limit that decreases as the slope of the surrounding area detected by the second detector increases.

7. The remote manipulation system according to claim 6, wherein
the second detector includes a sensor to sense the surrounding area of the remote working machine to detect the slope of the surrounding area of the remote working machine.

8. The remote manipulation system according to claim 6, wherein
the second detector is configured to detect the slope of the surrounding area of the remote working machine based on a position detector to detect a position of the remote working machine, the position of the remote working machine detected by the position detector, and map information indicating one or more slopes stored in a memory and/or a storage.

9. The remote manipulation system according to claim 1, wherein
the remote working machine is configured to, in addition to be remotely manipulated by the remote manipulator, perform automatic travel in which the remote working machine autonomously travels and/or perform manual travel in which the remote working machine is manually operated by a driver in the remote working machine; and
the traveling device is configured to cause the machine body to travel at or below the vehicle speed limit that is lower in a case of the remote manipulation than in a case where the remote working machine performs the automatic travel or the manual travel.
